# EUROPÄISCHE PATENTSCHRIFT

(11) **EP 2 685 377 B1**
(45) Veröffentlichungstag und Bekanntmachung des Hinweises auf die Patenterteilung: **31.01.2018**
(21) Anmeldenummer: 12175753.8
(22) Anmeldetag: 10.07.2012
(51) Int. Cl.: G06F 9/455, G06F 9/52

(54) **Verfahren und Anordnung zur Synchronisierung von zwei auf einer Hardware-Plattform ablaufenden Prozessen**
Method and assembly for synchronising two processes running on a hardware platform
Procédé et agencement destinés à la synchronisation de deux processus se déroulant sur une plate-forme matérielle

(43) Veröffentlichungstag der Anmeldung: 15.01.2014
(73) Patentinhaber: Siemens Aktiengesellschaft, 80333 München (DE)
(72) Erfinder: Hornung, Peter, 91054 Erlangen (DE); Dogan, Engin, 90480 Nürnberg (DE); Jäger, Peter, 90491 Nürnberg (DE); Sen, MustafaBedri, 90419 Nürnberg (DE)

(56) Entgegenhaltungen:
- US-A1- 2008 263 407

## Beschreibung

Die Erfindung betrifft ein Verfahren zur Synchronisierung von zwei auf einer Hardware-Plattform ablaufenden Prozessen gemäß dem Oberbegriff des Patentanspruchs 1, sowie eine Hardware-Plattform zur Synchronisierung von zwei auf diese ablaufenden Prozesse gemäß Patentanspruch 7.

Steuerungsaufgaben in der Automatisierungstechnik, insbesondere in der Fertigungs- und Prozessautomatisierung, werden meist durch speicherprogrammierbare Steuerungen (SPS) erledigt, wobei die Hardware-Plattform einer solchen Speicherprogrammierbaren Steuerung oft ein proprietärer Rechner (CPU genannt) ist. Regelmäßig läuft auf einer solchen CPU ein echtzeitfähiges Betriebssystem, welches oft durch eine sog. "Firmware" gebildet ist, und darauf eine Automatisierungsanwendung als "Prozess". Zum Bedienen und zum Beobachten des auf dem echtzeitfähigen Gerät ablaufenden Prozesses werden meist separate Rechner verwendet, sog. HMI-Geräte (HMI = Human-Machine-Interface) oder auch B&B-Geräte (B&B = Bedienen und Beobachten) genannt. Dabei ist es oft erforderlich, die Steuerungsanwendung, also den eine Automatisierungsaufgabe steuernden Prozess der speicherprogrammierbaren Steuerung, mit der HMI-Anwendung zu synchronisieren.

Bei den Automatisierungsanordnungen, die aus getrennten speicherprogrammierbaren Steuerungen und HMI-Geräten bestehen, sind echtzeitfähige Kommunikationsnetze bekannt, die zur Übertragung von solchen Meldungen geeignet sind, die eine Synchronisierung der beiden genannten Geräte miteinander ermöglichen.

Anstelle der proprietären speicherprogrammierbaren Steuerungen werden oft auch standardisierte Rechner, insbesondere Personal-Computer, eingesetzt, die mit einem Echtzeit-Betriebssystem versehen werden. Dieses Echtzeit-Betriebssystem kann dabei auch ein Standard-Betriebssystem mit einer Echtzeit-Erweiterung sein, die es gestattet, eine bestimmte Anwendung, insbesondere einen Prozess zur Steuerung einer industriellen Automatisierungsaufgabe, derart zu unterstützen, dass sich die erforderlichen Echtzeit-Kriterien erfüllen lassen. Wegen der Leistungsfähigkeit heutiger Personal-Computer bietet es sich darüber hinaus an, auf ein- und derselben Hardware-Plattform auch das Bedien- und Beobachtungsgerät, also die HMI-Komponente, oder eine andere Anwendung zur Analyse, Überwachung oder dgl. ablaufen zu lassen. Dabei ist es üblich, zur besseren Entkopplung der beiden Prozesse, nämlich der Steuerungsaufgabe und der Überwachungsaufgabe, zwei getrennte Betriebssysteme einzusetzen, die jeweils in einer eigenen virtuellen Maschine (virtuelle Laufzeitumgebung) ablaufen. Diese virtuellen Maschinen werden regelmäßig durch Einsatz eines sog. "Hypervisors", auch "Virtual-Machine-Monitor" (VMM) genannt, gebildet. Vorteilhaft ist dabei insbesondere, dass der zeitkritische Steuerungsprozess nach wie vor unter Kontrolle eines Echtzeit-Betriebssystems ablaufen kann, während für die Überwachungs- oder Beobachtungsaufgabe ggf. auch ein anderes Betriebssystem, auch ohne Echtzeit-Erweiterung, eingesetzt werden kann. Die Prozesse in dem nicht-echtzeitfähigen Betriebssystem können dabei aufgrund der getrennten Laufzeitumgebungen den zeitkritischen Steuerungsprozess nicht stören.

Auch bei der geschilderten Anordnung mit getrennten virtuellen Maschinen besteht oft die Anforderung, dass Prozesse der verschiedenen Laufzeitumgebungen und damit der verschiedenen Betriebssysteme zeitlich aneinander gekoppelt werden müssen, also synchronisiert werden müssen. Die Virtualisierungslösung "NI Real Time Hypervisor" des Herstellers National Instruments zeigt beispielsweise eine Konfiguration, bei der ein echtzeitfähiges Betriebssystem zur Steuerung einer Messwerterfassungsaufgabe oder dgl. mit einem Standard-Betriebssystem (GPOS- General Purpose Operation System) synchronisiert wird, wobei zum Austausch der Synchronisierungsmeldungen ein virtuelles Datennetzwerk (Virtual Ethernet) eingesetzt wird. Diese Lösung erfordert jedoch proprietäre Änderungen in beiden Betriebssystemen und den verwendeten Anwendungen (Prozessen) und ist darüber hinaus hinsichtlich ihrer Präzision im Timing durch die Möglichkeiten des virtuellen Datennetzwerks limitiert. Ein weiterer Nachteil besteht darin, dass eine solche Lösung die gewöhnlicher Weise von Programmierern von Applikationen mit mehreren Prozessen auf unterschiedlichen Betriebssystemen bevorzugten Synchronisierungs-Strategien mittels "Events", "Mutexen" (Mutex = Mutual Exclusion /sicherstellen eines gegenseitigen Ausschlusses) und "Semaphoren" (Datenstruktur zur Steuerung eines ausschließlichen Zugriffs) nur unzureichend oder überhaupt nicht unterstützt. Aus der Druckschrift US2008/0263407A1 ist bekannt, dass mehrere virtuelle Maschinen unter Kontrolle einer Virtualisierungssteuerung (Hypervisor, VMM) mittels Gerätetreibern auf virtuelle PCI-Geräte oder gemeinsam genutzte PCI-Geräte zugreifen können.

Es ist daher eine Aufgabe der vorliegenden Erfindung, ein einfach zu verwendendes und präzises Verfahren zur Synchronisierung von Prozessen, die in unterschiedlichen virtuellen Laufzeitumgebungen ablaufen, vorzuschlagen.

Es ist eine Kernidee der erfindungsgemäßen Lösung der Aufgabe, dass die Virtualisierungssteuerung (Hypervisor, VMM) für jede Laufzeitumgebung und damit für jedes beteiligte Betriebssystem ein virtuelles PCI-Gerät instantiiert, wobei mittels gleichzeitig zur Verfügung gestellter Gerätetreiber jedes Betriebssystem auf das jeweilige virtuelle PCI-Gerät zugreifen kann. Diese Gerätetreiber sollen zugleich Synchronisierungs-Objekte bereitstellen, wobei die beteiligten Betriebssysteme mittels der Gerätetreiber gemeinsamen Zugriff auf die Synchronisierungs-Objekte haben sollen, wobei die Synchronisierungsobjekte im einfachsten Fall Daten in einem gemeinsam genutzten Speicherbereich (Shared Memory) sein können.

Die Lösung der Aufgabe sieht insbesondere den Einsatz eines Verfahrens gemäß dem Patentanspruch 1 vor. Damit kann ein Benutzer unabhängig von den verwendeten Betriebssystemen auf einfache Weise Synchronisierungs-Mechanismen wie "Shared Memory", damit "Mutexe" und "Semaphoren" sowie "Events" etc. verwenden. Die Verwendung der Synchronisierungsmechanismen verlangt darüber hinaus keinen "Aussprung" ("VM Exit") einer Programmausführung in die Virtualisierungssteuerung (Hypervisor, VMM), so dass die Echtzeitfähigkeit der ablaufenden Prozesse nicht beeinträchtigt wird. Dies ist besonders in den Fällen vorteilhaft, in denen ein Echtzeit-Betriebssystem mit zeitkritischen Anwendungen verwendet wird.

Die Aufgabe wird außerdem durch eine Hardware-Plattform gemäß Patentanspruch 7 gelöst. Durch eine solche Hardware-Plattform lassen sich die anhand des Verfahrens beschriebenen Vorteile realisieren.

Erfindungsgemäß wird in der Hardware-Plattform für die virtuellen PCI-Geräte ein von beiden oder allen Gerätetreibern les- und beschreibbarer Speicher, sog. "Shared Memory", reserviert. Durch lesenden und schreibenden Zugriff der Betriebssysteme bzw. der darin integrierten Treiber ist ein Informationsaustausch, insbesondere zur Synchronisierung von Prozessen, auch ohne sog. "Aussprung" in die Virtualisierungssteuerung möglich. Darüber hinaus lassen sich mit dem gemeinsamen genutzten Speicher sehr leicht die Synchronisierungs-Methoden "Mutex" und "Semaphoren" realisieren. In einer vorteilhaften Ausgestaltung unterstützen die virtuellen PCI-Geräte bzw. die dafür vorgesehenen Betriebssystemspezifischen Treiber das Auslösen von sog. "Events", also insbesondere von "simulierten" Hardware-Interrupts. Dabei können die Treiber direkt auf die Interrupt-Controller ("APIC") der Hardware-Plattform zugreifen, ohne dass dafür eine Interaktion mit dem Hypervisor bzw. der Virtualisierungssteuerung nötig wäre. Die Verwendung solcher "Events" bietet den Vorteil, dass ein "Pollen" der Informationen in einem gemeinsam genutzten Speicherbereich nicht notwendig ist und überdies auch ein nur geringer und nahezu konstanter "Delay" bei der Verarbeitung einer Unterbrechungsanforderung gegeben ist. In einem solchen Anwendungsfall wird der gemeinsam genutzte Speicherbereich von den Prozessen bzw. den Treibern in erster Linie für den notwendigen Informationsaustausch zur Etablierung des Interrupt-Mechanismus' verwendet.

Vorteilhafte Ausgestaltungen des erfindungsgemäßen Verfahrens sind in den abhängigen Patentansprüchen angegeben, wobei die dort beschriebenen Merkmale sowohl einzeln, als auch in Kombination miteinander realisiert werden können. Die anhand der abhängigen Patentansprüche beschriebenen Merkmale und deren Vorteile gelten sinngemäß auch für die erfindungsgemäß ausgestaltete Hardware-Plattform.

Eine einfache Anbindung des erfindungsgemäßen Verfahrens und der dabei etablierten virtuellen Komponenten ergibt sich, wenn für jedes der Betriebssysteme jeweils eine Programmierschnittstelle (API) zum Zugriff auf das virtuelle PCI-Gerät bereitgestellt wird. Vorteilhaft werden dabei zum Zugriff auf die Funktionen der Programmierschnittstelle bei jedem der Betriebssysteme jeweils dieselben Befehle mit derselben Syntax verwendet, was dem Programmierer die Arbeit erleichtert und damit auch der Vermeidung von Fehlern dienlich ist.

Für das gesamte Timing, insbesondere für die Echtzeitfähigkeit der darauf angewiesenen Steuerungs-Prozesse, ist es von Vorteil, wenn die virtuellen Maschinen zum Ablauf auf unterschiedlichen Prozessor-Kernen einer Mehrkern-Architektur oder Multiprozessor-Architektur eingerichtet werden. Bei einer solchen Architektur werden als "Events" vorteilhaft Inter-Prozessor-Interrupts verwendet.

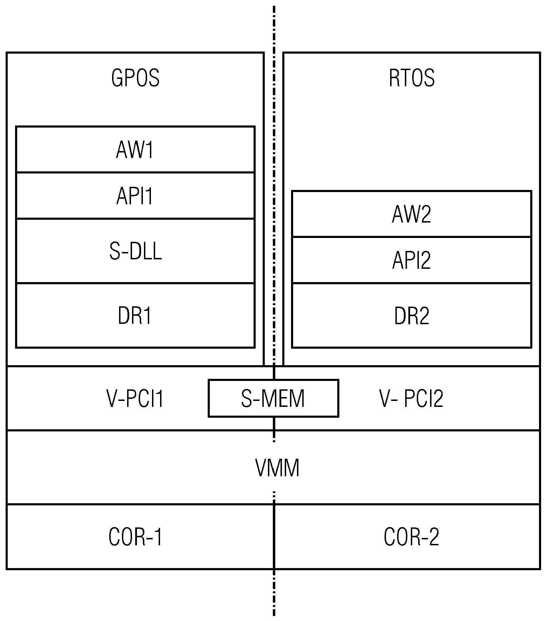

Ein Ausführungsbeispiel des erfindungsgemäßen Verfahrens wird nachfolgend anhand der Zeichnung erläutert. Dieses Ausführungsbeispiel dient gleichzeitig der Erläuterung einer erfindungsgemäßen Hardware-Plattform.

Dabei zeigt die einzige Figur in schematischer Darstellung die Software-Architektur auf der exemplarischen Hardware-Plattform.

In der Figur ist als Hardware-Plattform schematisch ein Personal-Computer mit einem Zweikern-Prozessor mit den beiden Prozessorkernen COR-1, COR-2 gezeigt. In alternativen Ausführungsformen können auch Multiprozessor-Architekturen zum Einsatz kommen. Auf der Hardware-Plattform ist eine Virtualisierungssteuerung VMM (Virtual Machine Monitor; Hypervisor) installiert, die zwei virtuelle Maschinen (virtuelle Laufzeitumgebungen) etabliert. Die auf den beiden virtuellen Maschinen aufsetzenden Software-Architekturen sind in der Darstellung der Figur durch eine senkrechte gestrichelte Linie voneinander getrennt. Dabei ist auf einer ersten virtuellen Maschine, die in der linken Hälfte der Figur dargestellt ist, ein Standard-Betriebssystem GPOS (General-Purpose Operation System) installiert, während in einer zweiten virtuellen Maschine (rechte Hälfte der Darstellung) ein Echtzeit-Betriebssystem RTOS (Real-Time Operation System) abläuft.

Obwohl im vorliegenden Beispiel Prozesse (Threads) eines Echtzeit-Betriebssystems RTOS (z.B. Microsoft Windows mit einer Real-Time-Extension) und eines Standard-Betriebssystems GPOS (z.B. Microsoft Windows in Standard-Konfiguration) miteinander synchronisiert werden, können auch beliebige andere Konstellationen an Betriebssystemen verwendet werden, z.B. zwei Echtzeit-Betriebssysteme oder zwei Standard-Betriebssysteme; insbesondere ist die Verwendung eines Echtzeit-Betriebssystems nicht zwingende Voraussetzung für die Funktion des beschriebenen Verfahrens.

Die Virtualisierungssteuerung VMM etabliert für die erste virtuelle Laufzeitumgebung ein erstes virtuelles PCI-Gerät V-PCI1, und für die zweite Laufzeitumgebung ein zweites virtuelles PCI-Gerät V-PCI2. Den beiden virtuellen PCI-Geräten V-PCI1, V-PCI2 ist ein gemeinsam genutzter Speicherbereich S-MEM ("Shared Memory") zugewiesen.

Abweichend von der hier gezeigten Architektur können in einer alternativen Ausführungsform auch zwei getrennte Virtualisierungssteuerungen bzw. zwei Instanzen einer Virtualisierungssteuerung eingesetzt werden.

Die Betriebssysteme GPOS, RTOS sind mit Treibern DR1, DR2 ("Driver") versehen worden, die für das jeweilige Betriebssystem GPOS, RTOS einen Zugriff auf das jeweilige virtuelle PCI-Gerät V-PCI1, V-PCI2 und beispielsweise auch den diesen virtuellen PCI-Geräten V-PCI1, V-PCI2 zugeordneten Speicher S-MEM bieten. In alternativen Ausführungsformen sind die Treiber DR1, DR2 auch in der Lage, mittels eines (nicht dargestellten) Interrupt-Controllers der Hardware-Plattform den virtuellen PCI-Geräten V-PCI1, V-PCI2 einen Hardware-Interrupt-Kanal zuzuweisen, womit über die Grenzen der jeweiligen virtuellen Maschine hinaus der jeweils anderen virtuellen Maschine eine Unterbrechungsanforderung (Interrupt) zugestellt werden kann.

Die Treiber DR1, DR2 besitzen jeweils eine Programmierschnittstelle API1, API2 (Application Programming Interface), die eine Software-Schnittstelle zu den Prozessen AW1, AW2 ("Anwendungen") darstellt. Am Beispiel der ersten virtuellen Maschine mit dem Betriebssystem GPOS ist in der Figur exemplarisch eine Software-Bibliothek S-DLL ("Sync-Dynamic Link Library") dargstellt, die als Bestandteil der Programmierschnittstelle API1 Funktionen zum Zugriff auf den Speicher S-MEM und dem exemplarisch genannten Interrupt-Mechanismus bietet, wobei dazu in Form einer Bibliothek Funktionen oder Prozeduren bereitgestellt werden. Vorteilhaft haben die für beide Betriebssysteme GPOS-RTOS zur Verfügung gestellten Funktionen und Prozeduren jeweils die gleiche Befehls-Syntax.

Als Beispiel für eine einfache Synchronisierung konfigurieren die Funktionen der Programmbibliothek S-DLL oder andere, nicht dargestellte Software-Elemente zumindest einen Teil des Speichers S-MEM als "Mutexe" oder "Semaphoren". Für Anwendungen, die höhere Anforderungen an die Echtzeitfähigkeit bzw. die Genauigkeit der Synchronisierung erfordern und zudem auf "Polling-Mechanismen" verzichten sollen, sind die genannten Funktionen und Prozeduren auch in der Lage, den geschilderten Interrupt-Mechanismus oder andere "Events" zu etablieren, wobei mit Auftreten eines Interrupts das jeweilige Interrupt-Ziel, beispielsweise der Prozess AW1 oder der Prozess AW2, zum Wechsel in einen bestimmten Zustand, der einem synchronisierten Zustand entspricht, aufgefordert wird.

Diese Implementierung ist nicht auf ein bestimmtes Programm oder einen bestimmten Prozess AW1, AW2 oder auf ein bestimmtes Betriebssystem GPOS, RTOS beschränkt; vielmehr können eine Anzahl von virtuellen Laufzeitumgebungen ("Guest Virtual Machines") auf der Virtualisierungssteuerung VMM ablaufen und die gleichen, gleichbenannten Objekte, Funktionen und Prozeduren verwenden. Damit ist es möglich, eine "Pseudo-Parallelisierung" von Prozessen in unterschiedlichen virtuellen Maschinen durchzuführen.

Die gezeigte Architektur ist "Plug-and-Play"-fähig, d.h., dass auch mit einem nachträglichen Etablieren der virtuellen PCI-Geräte V-PCI1, V-PCI2 dynamisch die erforderlichen Treiber DR1, DR2 von den Betriebssystemen GPOS, RTOS nachgeladen werden können und die entsprechende Synchronisierungs-Funktionen der Programmierschnittstellen API1, API2 nahezu unverzüglich während des laufenden Betriebs zur Verfügung gestellt werden.

Anstelle der virtuellen PCI-Geräte V-PCI1, V-PCI2 können auch andere Hardware-Einheiten für die virtuellen Laufzeitumgebungen simuliert bzw. emuliert werden, wobei die hier gezeigten PCI-Geräte den Vorteil haben, dass diese den geläufigen Betriebssystemen bereits strukturell bekannt sind und daher die geläufigen Betriebssysteme bereits Verwaltungs- und Zugriffsmechanismen auf Speicher von PCI-Geräten, Interrupts von PCI-Geräten etc. aufweisen. Dies macht es einfach, die entsprechenden Treiber DR1, DR2 für die unterschiedlichen Betriebssysteme GPOS, RTOS zu erstellen.

## Patentansprüche

1. Verfahren zur zeitlichen Synchronisierung von zwei auf einer Hardware-Plattform ablaufenden Prozessen (AW1, AW2), wobei ein erster der Prozesse (AW1) auf einem ersten Betriebssystem (GPOS) einer ersten virtuellen Maschine abläuft, wobei ein zweiter der Prozesse (AW2) auf einem zweiten Betriebssystem (RTOS)einer zweiten virtuellen Maschine abläuft, und
wobei ein Hypervisor (VMM) zur Verwaltung der virtuellen Maschinen vorgesehen ist,
**dadurch gekennzeichnet,**
**dass** durch den Hypervisor (VMM) für die erste virtuelle Maschine ein erstes virtuelles PCI-Gerät (V-PCI1) und für die zweite virtuelle Maschine ein zweites virtuelles PCI-Gerät (V-PCI2) etabliert wird, wobei das erste virtuelle PCI-Gerät (V-PCI1) durch die erste und das zweite virtuelle PCI-Gerät (V-PCI2) durch die zweite virtuelle Maschine zugreifbar ist,
**dass** in dem ersten und dem zweiten Betriebssystem (GPOS, RTOS) jeweils ein Gerätetreiber (DR1, DR2) zum Zugriff auf das jeweilige virtuelle PCI-Gerät (V-PCI1, V-PCI2) installiert und gestartet wird,
und
**dass** die zu synchronisierenden Prozesse (AW1, AW2) mittels jeweiligem Zugriff auf die jeweiligen Gerätetreiber (DR1, DR2) für die Synchronisierung benötigten Informationen über die virtuellen PCI-Geräte (V-PCI1, V-PCI2) miteinander austauschen,
**dass** in der Hardware-Plattform für die virtuellen PCI-Geräte (V-PCI1, V-PCI2) ein von beiden Gerätetreibern (DR1, DR2) les- und beschreibbarer Speicher (S-MEM) reserviert wird, dass die virtuellen PCI-Geräte (V-PCI1, V-PCI2) zum Austausch dieser für die Synchronisierung benötigten Informationen über diesen Speicher (S-MEM) eingerichtet werden, und
**dass** zur Synchronisierung der Prozesse (AW1, AW2) Mutexe, Semaphoren oder Events eingesetzt werden.

2. Verfahren nach Patentanspruch 1,
**dadurch gekennzeichnet,**
**dass** für jedes der Betriebssysteme (GPOS, RTOS) jeweils eine Programmierschnittstelle (API1, API2) zum Zugriff auf die virtuellen PCI-Geräte (V-PCI1, V-PCI2) bereitgestellt wird.

3. Verfahren nach Patentanspruch 2,
**dadurch gekennzeichnet,**
**dass** zum Zugriff auf die Funktionen der Programmierschnittstelle (API1, API2) bei jedem der Betriebssysteme (GPOS, RTOS) jeweils dieselben Befehle mit derselben Syntax verwendet werden.

4. Verfahren nach einem der vorhergehenden Patentansprüche,
**dadurch gekennzeichnet,**
**dass** zur Synchronisierung der Prozesse (AW1, AW2) durch den ersten Prozess (AW1) mittels des ersten virtuellen PCI-Gerätes (V-PCI1) die Generierung eines Interrupts an die zweite virtuelle Maschine mit dem zweiten Prozess (AW2) ausgelöst wird, oder umgekehrt.

5. Verfahren nach einem der vorhergehenden Patentansprüche,
**dadurch gekennzeichnet,**
**dass** die virtuellen Maschinen zum Ablauf auf unterschiedlichen Prozessor-Kernen (COR-1, COR-2) der Hardware-Plattform eingerichtet werden.

6. Verfahren nach Patentanspruch 5,
sofern rückbezogen auf Patentanspruch 4,
**dadurch gekennzeichnet,**
**dass** zumindest einer der Gerätetreiber (DR1, DR2) zum Auslösen eines Inter-Prozessor-Interrupts eingerichtet wird.

7. Hardware-Plattform zur zeitlichen Synchronisierung von zwei auf dieser ablaufenden Prozesse (AW1, AW2),
**dadurch gekennzeichnet,**
**dass** die Hardware-Plattform zum Ausführung eines der vorstehend beschriebenen Verfahren eingerichtet ist,
wobei auf der Hardware-Plattform ein Hypervisor (VMM) installiert ist, der zur Etablierung je eines virtuellen PCI-Gerätes (V-PCI1, V-PCI2) für zumindest zwei virtuelle Maschinen eingerichtet ist,
wobei die Hardware-Plattform derart konfiguriert ist, dass in einer ersten der virtuellen Maschinen ein erstes Betriebssystem (GPOS) mit einem ersten Gerätetreiber (DR1) zum Zugriff auf ein erstes der virtuellen PCI-Geräte (V-PCI1) und in einer zweiten virtuellen Maschine ein zweites Betriebssystem (RTOS) mit einem zweiten Gerätetreiber (DR2) zum Zugriff auf ein zweites der virtuellen PCI-Geräte (V-PCI2) installiert und gestartet ist,
wobei die zu synchronisierenden Prozesse (AW1, AW2) jeweils derart konfiguriert sind, dass diese mittels Zugriff auf die jeweiligen Gerätetreiber (DR1, DR2) zum Austausch von für die Synchronisierung benötigten Informationen über die virtuellen PCI-Geräte (V-PCI1, V-PCI2) eingerichtet sind,
**dass** in der Hardware-Plattform für die virtuellen PCI-Geräte (V-PCI1, V-PCI2) ein von beiden Gerätetreibern (DR1, DR2) les- und beschreibbarer Speicher (S-MEM) reserviert ist,
**dass** die virtuellen PCI-Geräte (V-PCI1, V-PCI2) zum Austausch dieser für die Synchronisierung benötigten Informationen über diesen Speicher (S-MEM) eingerichtet werden, und
**dass** zur Synchronisierung der Prozesse (AW1, AW2) Mutexe, Semaphoren oder Events eingesetzt werden.

## Claims

1. Method for temporally synchronizing two processes (AW1, AW2) running on a hardware platform,
a first of the processes (AW1) running on a first operating system (GPOS) of a first virtual machine,
a second of the processes (AW2) running on a second operating system (RTOS) of a second virtual machine, and
a hypervisor (VMM) for managing the virtual machines being provided,
**characterized**
**in that** the hypervisor (VMM) establishes a first virtual PCI device (V-PCI1) for the first virtual machine and establishes a second virtual PCI device (V-PCI2) for the second virtual machine, the first virtual PCI device (V-PCI1) being able to be accessed by the first virtual machine and the second virtual PCI device (V-PCI2) being able to be accessed by the second virtual machine,
**in that** a device driver (DR1, DR2) for accessing the respective virtual PCI device (V-PCI1, V-PCI2) is respectively installed and started in the first and second operating systems (GPOS, RTOS),
and
**in that** the processes (AW1, AW2) to be synchronized interchange information required for the synchronization with one another via the virtual PCI devices (V-PCI1, V-PCI2) by respectively accessing the respective device drivers (DR1, DR2),
**in that** a memory (S-MEM) which can be read and written to by both device drivers (DR1, DR2) is reserved in the hardware platform for the virtual PCI devices (V-PCI1, V-PCI2),
**in that** the virtual PCI devices (V-PCI1, V-PCI2) are set up to interchange this information required for the synchronization via this memory (S-MEM), and
**in that** mutexes, semaphores or events are used to synchronize the processes (AW1, AW2).

2. Method according to Patent Claim 1,
**characterized**
**in that** a programming interface (API1, API2) for accessing the virtual PCI devices (V-PCI1, V-PCI2) is respectively provided for each of the operating systems (GPOS, RTOS).

3. Method according to Patent Claim 2,
**characterized**
**in that** the same instructions with the same syntax are respectively used to access the functions of the programming interface (API1, API2) in each of the operating systems (GPOS, RTOS).

4. Method according to one of the preceding patent claims,
**characterized**
**in that** the generation of an interrupt in the second virtual machine is initiated using the second process (AW2) in order to synchronize the processes (AW1, AW2) by means of the first process (AW1) using the first virtual PCI device (V-PCI1), or vice versa.

5. Method according to one of the preceding patent claims,
**characterized**
**in that** the virtual machines are set up to run on different processor cores (COR-1, COR-2) of the hardware platform.

6. Method according to Patent Claim 5,
if referring back to Patent Claim 4,
**characterized**
**in that** at least one of the device drivers (DR1, DR2) is set up to initiate an inter-processor interrupt.

7. Hardware platform for temporally synchronizing two processes (AW1, AW2) running on said platform,
**characterized**
**in that** the hardware platform is set up to carry out one of the methods described above,
a hypervisor (VMM) which is set up to establish a virtual PCI device (V-PCI1, V-PCI2) for each of at least two virtual machines being installed on the hardware platform,
the hardware platform being configured in such a manner that a first operating system (GPOS) with a first device driver (DR1) for accessing a first of the virtual PCI devices (V-PCI1) is installed and started in a first of the virtual machines and a second operating system (RTOS) with a second device driver (DR2) for accessing a second of the virtual PCI devices (V-PCI2) is installed and started in a second virtual machine,
the processes (AW1, AW2) to be synchronized each being configured in such a manner that they are set up to interchange information required for the synchronization via the virtual PCI devices (V-PCI1, V-PCI2) by accessing the respective device drivers (DR1, DR2),
**in that** a memory (S-MEM) which can be read and written to by both device drivers (DR1, DR2) is reserved in the hardware platform for the virtual PCI devices (V-PCI1, V-PCI2),
**in that** the virtual PCI devices (V-PCI1, V-PCI2) are set up to interchange this information required for the synchronization via this memory (S-MEM), and
**in that** mutexes, semaphores or events are used to synchronize the processes (AW1, AW2).

## Revendications

1. Procédé de synchronisation dans le temps de deux processus (AW1, AW2), se déroulant sur une plateforme matérielle,
dans lequel un premier des processus (AW1) se déroule sur un premier système (GPOS) de fonctionnement d'une première machine virtuelle,
dans lequel un deuxième des processus (AW2) se déroule sur un deuxième système (RTOS) de fonctionnement d'une deuxième machine virtuelle,
et
dans lequel un hyperviseur (VMM) est prévu pour la gestion des machines virtuelles,
**caractérisé**
**en ce que**, par l'hyperviseur (VMM), on établit, pour la première machine virtuelle, un premier appareil PCI virtuel (V-PCI1), et pour la deuxième machine virtuelle, un deuxième appareil PCI virtuel (V-PCI2), dans lequel le premier appareil PCI virtuel (V-PCI1) est accessible par la première et le deuxième appareil PCI virtuel (V-PCI2) par la deuxième machine virtuelle,
**en ce que** l'on installe et l'on fait démarrer, dans le premier et dans le deuxième système (GPOS, RTOS) de fonctionnement, respectivement un pilote (DR1, DR2) d'appareil pour l'accès à l'appareil PCI virtuel (V-PCI1, V-PCI2) respectif,
et
**en ce que** les processus (AW1, AW2) à synchroniser échangent entre eux, par l'intermédiaire des appareils PCI virtuels (V-PCI1, V-PCI2), au moyen d'un accès respectif aux pilotes (DR1, DR2) d'appareil respectif, des informations nécessaires à la synchronisation,
**en ce que**, dans la plateforme matérielle, on réserve, pour les appareils PCI virtuels (V-PCI1, V-PCI2), une mémoire (S-MEM), dans laquelle les deux pilotes (DR1, DR2) d'appareil peuvent lire et écrire,
**en ce que** les appareils PCI virtuels (V-PCI1, V-PCI2) sont conçus pour échanger, par l'intermédiaire de cette mémoire (S-MEM), ces informations nécessaires à la synchronisation et
**en ce que** l'on utilise, pour la synchronisation des processus (AW1, AW2), des mutexes, des sémaphores ou des événements.

2. Procédé suivant la revendication 1,
**caractérisé**
**en ce que**, pour chacun des systèmes (GPOS, RTOS) de fonctionnement, on met à disposition, pour accéder aux appareils PCI virtuels (V-PCI1, V-PCI2), respectivement une interface (API1, API2) de programmation.

3. Procédé suivant la revendication 2,
**caractérisé**
**en ce que**, pour accéder aux fonctions des interfaces (API1, API2) de programmation, on utilise, pour chacun des systèmes (GPOS, RTOS) de fonctionnement, respectivement les mêmes instructions ayant la même syntaxe.

4. Procédé suivant l'une des revendications précédentes,
**caractérisé**
**en ce que**, pour synchroniser les processus (AW1, AW2), par le premier processus (AW1), on déclenche, au moyen du premier appareil PCI virtuel (V-PCIL1), la production d'une interruption sur la deuxième machine virtuelle ayant le deuxième processus (AW2) ou inversement.

5. Procédé suivant l'une des revendications précédentes,
**caractérisé**
**en ce que** l'on conçoit les machines virtuelles pour un déroulement sur des noyaux (COR-1, COR-2) de processeur différent de la plateforme matérielle.

6. Procédé suivant la revendication 5,
pour autant qu'elle se rapporte à la revendication 4,
**caractérisé**
**en ce que** l'on conçoit au moins l'un des pilotes (DR1, DR2) d'appareil pour le déclenchement d'une interruption inter-processeur.

7. Plateforme matérielle de synchronisation dans le temps de deux processus (AW1, AW2) s'y déroulant,
**caractérisée**
**en ce que** la plateforme matérielle est conçue pour l'exécution d'un procédé décrit ci-dessus,
dans laquelle il est installé, sur la plateforme matérielle, un hyperviseur (VMM) conçu pour établir un appareil PCI virtuel (V-PCI1, V-PCI2) pour au moins deux machines virtuelles,
dans laquelle la plateforme matérielle est configurée de manière à ce que, dans une première des machines virtuelles, un premier système (GPOS) de fonctionnement, ayant un premier pilote (DR1) d'appareil, soit installé et démarré pour accéder à un premier des appareils PCI virtuels (V-PCI1) et, dans une deuxième machine virtuelle, un deuxième système (RTOS) de fonctionnement, ayant un deuxième pilote (DR2) d'appareil, soit installé et démarré pour accéder à un deuxième des appareils PCI virtuels (V-PCI2),
dans laquelle les processus (AW1, AW2) à synchroniser sont configurés respectivement de manière à ce que ceux-ci soient conçus pour échanger, au moyen d'un accès aux pilotes (DR1, DR2) d'appareil respectif, des informations nécessaires à la synchronisation, par l'intermédiaire des appareils PCI virtuels (V-PCI1, V-PCI2),
**en ce que**, dans la plateforme matérielle, il est réservé, pour les appareils PCI virtuels (V-PCI1, V-PCI2), une mémoire (S-MEM), dans laquelle les deux pilotes (DR1, DR2) d'appareil peuvent lire et écrire,
**en ce que** les appareils PCI virtuels (V-PCI1, V-PCI2) sont conçus pour échanger ces informations nécessaires à la synchronisation par cette mémoire (S-MEM) et
**en ce que**, pour la synchronisation des processus (AW1, AW2), sont utilisé des mutexes, des sémaphores ou des événements.
